# FASCICULE DE BREVET EUROPEEN

(11) **EP 1 454 927 B1**
(45) Date de publication et mention de la délivrance du brevet: **12.10.2005**
(21) Numéro de dépôt: 04290392.2
(22) Date de dépôt: 13.02.2004
(51) Int. Cl.: C08F 14/22, C08K 5/00, C08K 5/098

(54) **Procedé de fabrication de pvdf thermiquement stable**
HERSTELLUNGSVERFAHREN VON THERMISCH STABILEM PVDF
PROCESS FOR MAKING THERMALLY STABLE PVDF

(30) Priorité: 03.03.2003 FR 0302531
(43) Date de publication de la demande: 08.09.2004
(73) Titulaire: Arkema, 92800 Puteaux (FR)
(72) Inventeur: Kappler, Patrick, 69130 Ecully (FR); Gauthe, Véronique, 69360 Ternay (FR)
(74) Mandataire: Neel, Henry

(56) Documents cités:
- US-A- 4 025 709
- US-A- 4 524 197
- US-A- 5 744 561

## Description

### Domaine de l'invention

Les polymères à base de fluorure de vinylidène CF2=CH2 (VDF) tels que par exemple le PVDF (polyfluorure de vinylidène) sont connus pour offrir d'excellentes propriétés de stabilité mécanique, une très grande inertie chimique, ainsi qu'une bonne résistance au vieillissement. Ces qualités sont exploitées pour des domaines d'application variés. On citera par exemple, la fabrication de pièces extrudées ou injectées pour l'industrie du génie chimique ou la microélectronique, l'utilisation sous forme de gaine d'étanchéité pour le transport des gaz ou des hydrocarbures, l'obtention de films ou de revêtements permettant la protection dans le domaine architectural, et la réalisation d'éléments protecteurs pour des usages électrotechniques.

La présente invention concerne un procédé de fabrication de PVDF homopolymère ou copolymère, plus précisément un procédé par polymérisation radicalaire du fluorure de vinylidène (VDF), et éventuellement d'un comonomère, en dispersion aqueuse en utilisant un persulfate comme initiateur (aussi appelé amorceur) et dans lequel on ajoute de l'acétate de sodium. On effectue la polymérisation éventuellement en présence d'un additif tensioactif encore appelé émulsifiant ou surfactant. Le PVDF obtenu doit contenir le moins possible de cet émulsifiant et en général de l'ordre de 300 ppm au plus.

### L'art antérieur et le problème technique

Le brevet **US 4025709** décrit la polymérisation du VDF en présence de persulfate de potassium comme initiateur, d'acétate de sodium et d'un additif dispersant qui peut être un perfluorooctanoate de sodium (ex 1-3) ou un sulfonate de formule Rf-C₂H₄-SO₃M dans laquelle M désigne un métal alcalin ou l'ammonium. La proportion d'additif dispersant par rapport au PVDF formé est comprise entre 550 et 2200 ppm. Le PVDF est obtenu sous forme d'un latex qu'on sèche à l'étuve ou qu'on sépare par centrifugation pour obtenir le PVDF. Il n'y a pas de lavage du latex, le PVDF contient donc entre 550 et 2200 ppm d'additif dispersant. Avec ce mode de séchage l'additif tensioactif n'est pas éliminé ou est très partiellement éliminé contrairement à l'invention revendiquée.

Le brevet **EP 169328 (US 4569978)** décrit la polymérisation du VDF en présence de Diisopropyl peroxydicarbonate (IPP) comme initiateur et il n'y a pas d'acétate de sodium. Le brevet **EP 816397** décrit un procédé similaire au précédent sauf que l'initiateur est du peroxyde de ditertiobutyle.

Le brevet **EP 387938** décrit la polymérisation du VDF en présence de persulfate d'ammonium comme initiateur, d'acétate d'éthyle comme agent de transfert de chaîne mais sans acétate de sodium ni additif dispersant.

Le brevet **US 5955556** décrit la polymérisation du VDF en présence d'un couple oxydant-réducteur mais sans additif dispersant ni acétate de sodium. L'oxydant peut être un persulfate.

Le PVDF fabriqué selon les procédés décrits plus haut présente une stabilité thermique insuffisante pour des applications qui requièrent une transformation par extrusion, moulage par compression ou injection.

L'art antérieur a aussi décrit l'incorporation de sels dans le PVDF pour le stabiliser thermiquement. Le brevet **FR 1298572** décrit du PVDF contenant des sels de baryum ou de strontium. Le brevet **US 3728303** décrit la polymérisation du VDF en présence de persulfate d'ammonium comme initiateur mais sans additif dispersant. On ajoute ensuite dans le PVDF du chlorure ou du chlorate de sodium ou de potassium. Le brevet **EP 870792** décrit la polymérisation du VDF en présence de persulfate comme initiateur et d'un additif dispersant qui est du perfluorooctanoate d'ammonium. On ajoute du nitrate de potassium soit au cours de la polymérisation du VDF soit dans le PVDF avant son introduction dans une extrudeuse. La demande de brevet **BE 9600257 (US 5929152)** décrit l'amélioration de la stabilité du PVDF par l'addition d'un sel de bismuth.

On a maintenant trouvé qu'en effectuant la polymérisation en dispersion aqueuse en utilisant un persulfate comme initiateur et qu'en ajoutant de l'acétate de sodium et éventuellement un alkylsulfonate de potassium on obtenait un PVDF très stable thermiquement à condition que la stabilité thermique ne soit pas dégradée par des résidus indésirables de tensio actif. On effectue la polymérisation éventuellement en présence d'un additif tensioactif pour augmenter la quantité de PVDF produite par batch de polymérisation. mais dans ce cas le PVDF obtenu doit contenir un niveau d'additif tensioactif résiduel suffisamment faible pour ne pas affecter la stabilité thermique. Pour arriver à ce niveau faible de résidu tensioactif il suffit d'atomiser la dispersion. Les tensioactifs ont en effet la propriété de s'éliminer si la température d'atomisation est suffisamment élevée. La teneur en additif tensioactif doit être inférieure à 300 ppm en poids par rapport au PVDF pour éviter une détérioration de la stabilité thermique.

### Brève description de l'invention

La présente invention concerne un procédé de fabrication de PVDF homopolymère ou copolymère par polymérisation radicalaire du fluorure de vinylidène (VDF), et éventuellement d'un comonomère, en dispersion aqueuse en présence d'un agent de transfert, d'un persulfate comme initiateur radicalaire, éventuellement d'un additif tensioactif, éventuellement d'une paraffine, dans lequel :
a) on ajoute de l'acétate de sodium soit au début, soit au cours, soit après la polymérisation,
b) on ajoute éventuellement un alkylsulfonate de potassium après la polymérisation,
c) on obtient une dispersion aqueuse de PVDF,
d) on recueille le PVDF par atomisation de la dispersion obtenue en c) avec de l'air à une température comprise entre 120 et 220°C, la dispersion aqueuse obtenue en c) n'étant pas lavée à l'eau avant atomisation.

On obtient ainsi un PVDF contenant de l'acétate de sodium, éventuellement un alkylsulfonate de potassium et contenant moins de 300 ppm d'additif tentioactif . Il contient aussi des extrémités de chaîne :

-CF₂-CH₂-O-SO₃^{⊖}

provenant de l'utilisation du persulfate comme initiateur. Ce PVDF est très stable thermiquement. La présente invention concerne aussi ce PVDF en tant que produit nouveau.

Selon la nature de l'additif tensioactif et ses proportions le procédé est dit "en émulsion", ou tous autres procédés dérivés de l'émulsion (microsuspension, miniémulsion...) réalisable avec du persulfate comme amorçeur, lesquels sont parfaitement connus par l'homme de l'art. Après la fin de la polymérisation on sépare le PVDF de l'eau et des restes éventuels des réactifs engagés.

Dans le cas des procédés type émulsion, le polymère se présente sous la forme d'un latex composé de particules très fines, dont le diamètre moyen est généralement inférieur à 1 micron. Ce latex peut être coagulé et éventuellement concentré en éliminant une partie de l'eau par exemple par centrifugation. Certains additifs tensioactif éventuellement utilisés à la polymérisation peuvent entraîner une dégradation de la stabilité thermique s'ils restent présents dans le PVDF. Puis on peut sécher le latex et simultanément éliminer le tensioactif en le mettant au contact d'un gaz chaud dans un atomiseur et on recueille le PVDF en poudre. Cette technique est connue et utilisée dans les procédés de fabrication du PVDF.

Selon une forme avantageuse l'invention est un procédé discontinu ou semi-continu de fabrication de PVDF homopolymère ou copolymère dans lequel :
- on charge le réacteur de polymérisation avec de l'eau, l'additif tensioactif éventuel et éventuellement une paraffine,
- le réacteur est désaéré pour éliminer l'oxygène,
- le réacteur est porté à la température choisie et on charge le VDF et le monomère éventuel jusqu'à atteindre la pression voulue,
- l'agent de transfert est introduit dans le réacteur soit en totalité soit en partie au départ et en partie au cours de la polymérisation,
- on ajoute de l'acétate de sodium en une ou plusieurs fois soit au début, soit au cours, soit après la polymérisation,
- on ajoute le persulfate (l'initiateur) en totalité ou en partie pour démarrer la polymérisation et la baisse de pression qui en résulte est compensée par l'ajout de VDF et du comonomère éventuel,
- le reste éventuel de l'initiateur est ajouté au cours de la polymérisation,
- après introduction de la quantité prévue de VDF et de comonomère éventuel le réacteur est dégazé et on obtient une dispersion aqueuse de PVDF,
- on ajoute éventuellement un alkyl sulfonate de potassium,
- la dispersion aqueuse de PVDF est introduite dans un atomiseur avec de l'air à une température comprise entre 120 et 220°C et on recueille le PVDF en poudre.

La température choisie est la température suffisante pour polymériser le VDF et est de l'ordre de 45 à 130°C et avantageusement entre 70 et 90°C. La pression voulue est de l'ordre de 35 à 125 bars.

Le volume d'eau dans lequel on réalise la dispersion des monomères, les quantités d'additif tensioactif, d'initiateur et d'agent de transfert sont déterminables facilement par l'homme de métier. On effectue la polymérisation dans un réacteur agité.

### Description détaillée de l'invention

**S'agissant du comonomère fluoré éventuel** il est avantageusement choisi parmi les composés contenant un groupe vinyle capable de s'ouvrir par l'action de radicaux libres pour se polymériser et qui contiennent, directement attaché à ce groupe vinyle, au moins un atome de fluor, un groupe fluoroalkyle ou un groupe fluoroalkoxy. A titre d'exemple de comonomère on peut citer le fluorure de vinyle; le trifluoroethylene (TRFE); le chlorotrifluoroethylene (CTFE); le 1,2-difluoroethylene; le tetrafluoroethylene (TFE); l'hexafluoropropylene (HFP); les perfluoro(alkyl vinyl) ethers tels que le perfluoro(methyl vinyl)ether (PMVE), le perfluoro(ethyl vinyl) ether (PEVE) et le perfluoro(propyl vinyl) ether (PPVE); le perfluoro(1,3 -dioxole); le perfluoro(2,2-dimethyl- 1,3 -dioxole) (PDD); le produit de formule CF₂=CFOCF₂CF(CF₃)OCF₂CF2X dans laquelle X est SO₂F, CO₂H, CH₂OH, CH₂OCN ou CH₂OPO₃H; le produit de formule CF₂=CFOCF₂CF₂SO₂F; le produit de formule F(CF₂)ₙCH₂0CF=CF₂ dans laquelle n est 1, 2, 3, 4 or 5; le produit de formule R₁CH₂OCF=CF₂ dans laquelle R₁ est l'hydrogene ou F(CF2)z et z vaut 1, 2, 3 ou 4; le produit de formule R₃OCF=CH₂ dans laquelle R₃ est F(CF2)z- et z est 1, 2, 3 or 4; le perfluorobutyl ethylene (PFBE); le 3,3,3-trifluoropropene et le 2-trifluoromethyl-3 ,3 ,3 -trifluoro- 1 -propene. On peut utiliser plusieurs comonomères. S'agissant du PVDF copolymère la proportion de VDF est d'au moins 60% en poids pour 40% de comonomère et de préférence d'au moins 85% en poids pour 15% de comonomère. Le comonomère est avantageusement choisi parmi l'HFP, le CTFE, le TFE et le TRFE.

**S'agissant du tensioactif** dans les procédés en émulsion on utilise avantageusement un tensioactif ionique dérivé d'un acide ou une d'une base organique. Les brevets US 4025709, US 4569978, US 4360652, EP 626396 et EP 0655468 décrivent les procédés de synthèse du PVDF par mise en émulsion aqueuse du VF₂ et sa polymérisation, on y trouve de nombreuses formules de tensioactifs.

A titre d'exemple on peut citer ceux de formule générale : ZCₙF₂ₙCOOM dans laquelle Z est un atome de fluor ou de chlore, n est un nombre entier valant 6 à 13 et M est un atome d'hydrogène ou de métal alcalin ou un groupe ammonium ou un groupe ammonium comportant au moins un substituant alkyle inférieur.

On peut encore citer les perfluoroalkanoates de lithium de formule F₃C(CF₂)ₙ₋₂CO₂Li où n = 7, 8, 9 et 10.

La quantité totale de tensioactif introduite, au départ ou en cours de polymérisation, peut être comprise entre 0 et 5000 ppm du PVDF fabriqué (sensiblement égal à la charge totale de monomères fluorés mis en oeuvre).

Avantageusement on utilise le perfluorooctanoate d'ammonium et le perfluorononanoate d'ammonium ou leur mélanges, c'est à dire le produit de formule ZCₙF₂ₙCOOM dans laquelle Z est F, M l'ammonium et n moyen est compris entre 8 et 9.

Dans le cas ou un tensioactif est introduit à un taux supérieur à 300 ppm en poids par rapport au PVDF il est nécessaire de mettre en oeuvre un procédé de séchage spécifique permettant de l'éliminer partiellement sans éliminer les autres espèces hydrosolubles présentes (acétate de sodium et l'alkylsulfonate de potassium éventuel). Lorsque le PVDF en dispersion aqueuse n'est pas soumis à un lavage à l'eau qui éliminerait simultanément le tensioactif ainsi que l'acétate de sodium et l'alkylsulfonate de potassium éventuel le procédé de séchage utilisé est l'atomisation de la dispersion aqueuse de PVDF. On a constaté en effet que le tensioactif était éliminé du PVDF pendant l'atomisation ou au moins fortement réduit à une teneur inférieure à 300 ppm par rapport au PVDF. L'atomisation s'effectue avec de l'air entre 120 et 220°C, l'extrait sec de la dispersion aqueuse de PVDF est avantageusement comprise entre 15 et 30%. Si l'extrait sec de la dispersion à la fin de la polymérisation est supérieur à cette fourchette on peut y ajouter de l'eau pour la diluer. Il est bien clair qu'ajouter de l'eau n'est pas un lavage, en effet il existe des procédés de traitement des dispersions fines telles que des latex dans lesquelles on transforme le latex en bouillie aérée ou crème sur laquelle on peut faire passer de l'eau qui ne reste pas dans cette crème. puis cette crème peut être ensuite diluée et séchée par exemple par atomisation.

Dans le cas ou on n'introduit pas de tensioactif ou qu'on introduit une quantité inférieure à 300 ppm on peut aussi effectuer un séchage par atomisation pour récupérer le PVDF.

La proportion de tensioactif dans le PVDF est déterminée par analyse RMN.

**Avantageusement on ajoute aussi, en plus du tensioactif, une paraffine.** La paraffine mise en oeuvre a un point de fusion allant de 40 à 70°C et représente de 0,005 à 0.05 % en poids par rapport au poids total des monomères fluorés.

**S'agissant de l'amorceur** et donc le persulfate , c'est avantageusement un persulfate alcalin et de préférence un persulfate de potassium ou d'ammonium.

Avantageusement l'amorceur (ou initiateur radicalaire) mis en oeuvre représente de 50 à 600 ppm et de préférence 100 à 400 ppm en poids par rapport au poids total du ou des monomères fluorés mis en oeuvre.

L'analyse RMN a mis en évidence des extrémités de chaîne :

-CF₂-CH₂-O-SO₃^{⊖}

Il est possible de quantifier le nombre de ces extrémités de chaîne par le rapport de leur nombre ramené à 1000 motifs de VDF. Ce taux dépend des masses moléculaires et de la quantité de persulfate utilisé. Le polymère selon l'invention a un taux d'extrémités de chaînes telles que citées plus haut compris entre 0.01 et 0,08 pour 1000 motifs VDF.

**S'agissant de l'agent de transfert,** on désigne ainsi tout produit qui permet de limiter la masse molaire du polymère tout en propageant la réaction de polymérisation. Les agents de transfert décrits dans l'art antérieur de la préparation du PVDF conviennent. Il présente le plus souvent une liaison hydrogène sensible à une attaque radicalaire. A titre d'exemple on peut citer l'acétone, l'isopropanol, l'acétate de méthyle, l'acétate d'éthyle, le diethylether, le méthyltertiobutyle ether, l'acétate de n-butyle, le malonate de diéthyle et le carbonate de diéthyle et différents composés chlorofluorocarbonés. La quantité d'agent de transfert dépend essentiellement de sa nature et de la masse molaire moyenne désirée pour la fraction de polymère obtenue en sa présence, laquelle conditionne la viscosité moyenne du produit final. De préférence, l'agent de transfert mis en oeuvre représente de 0,05 à 5 % en poids par rapport au PVDF fabriqué. Avantageusement on utilise l'acétate d'éthyle.

Le phénomène de terminaison de chaînes génère des terminaisons - CH₂-CF₂H et -CF₂-CH₃ parfaitement identifiables. Le radical issu de la réaction de transfert réinitie de nouvelles chaînes dans des proportions plus importantes que les radicaux générés par la décomposition du persulfate. c'est la raison pour laquelle les extrémités :

-CF₂-CH₂-O-SO₃^{⊖}

ne représentent que 0,3 à 1% de l'ensemble des extrémités de chaîne détectables.

**S'agissant de l'acétate de sodium** on utilise avantageusement l'acétate trihydrate CH₃-COONa, 3H₂O. La proportion exprimée en trihydrate est avantageusement comprise entre 50 et 600 ppm par rapport au PVDF fabriqué. Le sodium amené par l'acétate de sodium est mesurable par fluorescence X. Il est exprimé dans le tableau 2 en ppm pondéral de sodium par rapport au PVDF.

**S'agissant de l'alkyle sulfonate de potassium** (R-SO₃K) la proportion en poids par rapport au PVDF fabriqué peut être comprise entre 0 et 300 ppm. Les groupes alkyles R de ce sulfonate sont linéaires ou ramifiés et ont de 1 à 11 atomes de carbone. On préfère l'éthyle, le méthyle, l'isopropyle et le n-propyle. La proportion d'alkyle sulfonate dans le PVDF est déterminée par analyse RMN.

**Évaluation de la stabilité thermique :** A partir de 40g de poudre (de PVDF) on forme par moulage par compression sous 30 bars et à 205°C pendant 6 minutes une plaque de 260x20x4mm qui est soumise à une trempe à l'eau à 20°C. La plaque est ensuite réchauffée dans un four Metrastat® PSD 260 à 265°C pendant 1 h. Après ce traitement thermique la plaque peut être plus ou moins colorée. La couleur est déterminée par une mesure de jaunissement. La plaque est mise sur une céramique blanche calibrée et l'indice de jaunissement est mesuré à l'aide d'un colorimètre de marque Minolta® CR 200 en utilisant la norme ASTM D 1925 pour le calcul de l'indice de jaune.

On évalue aussi la stabilité thermique par un moulage de plaque. La poudre issue du séchage du latex est granulée dans une extrudeuse CLEXTRAL® BC 21 double vis corotative à une température de 230°C et une vitesse de rotation de 120 tours par minute. Une filière à jonc permet de faire des granulés de 4 mm. A l'aide de ces granulés des plaques de 65 mm de diamètre et 3 mm d'épaisseur sont pressées à 230°C pendant 9 min et 120 min à une pression de 20 bars. La coloration des plaques est mesurée à l'aide d'un colorimètre de marque Minolta® CR 200 en utilisant la norme ASTM D 1925 pour le calcul de l'indice de jaune.

### Exemples

### Exemple 1

Dans un réacteur de 30 litres sont introduits à température ambiante :
- 21 litres d'eau déionisée,
- 29 g de paraffine de point de fusion égal à 60°C,
- 1,8 g d'acétate de sodium trihydrate.
Après fermeture et désaération le réacteur est mis sous agitation et chauffé à 83°C. Après introduction de 29 g d'acétate d'éthyle le réacteur est pressurisé à 85 bars avec du VDF. Après injection de 180 g d'une solution de persulfate de potassium à 0,5% en poids, la polymérisation démarre et la pression est maintenue à 85 bars par du VDF. Après introduction de 3500 g de VDF on rajoute 147 g d'acétate d'éthyle et 180 g d'une solution de persulfate de potassium à 0,5% en poids. Après introduction de 7600 g de VDF au total (temps= 2h) on laisse baisser la pression jusqu'à 40 bars et on dégaze le monomère résiduaire. Le latex est filtré et la paraffine excédentaire est éliminée. Le poids de latex obtenu est de 28,8 kg. Le taux de matières sèches (ou extrait sec) est de 24%. Dans le latex on rajoute 100 g d'une solution aqueuse contenant 0,5 g d'éthylsulfonate de potassium. Le latex est ensuite dilué à 20% de matières sèches et atomisé à l'aide d'un atomiseur NIRO MINOR PRODUCTION® avec une température d'entrée d'air de 140°C et de sortie d'air de 85°C. Le débit d'évaporation d'eau est de 7 kg/h. la poudre obtenue est ensuite granulée à l'aide d'une extrudeuse CLEXTRAL® BC 21 à 230°C, 12O tr/min.

### Exemple 2

Dans un réacteur de 30 litres sont introduits à température ambiante :
- 17 litres d'eau déionisée,
- 2 g de paraffine de point de fusion égal à 60°C,
- 22,6 g d'une solution à 15% de perfluorooctanoate d'ammonium.
Après fermeture et désaération le réacteur est mis sous agitation et chauffé à 83°C. Après introduction de 88 g d'acétate d'éthyle le réacteur est pressurisé à 45 bars avec du VDF. Après injection de 300 g d'une solution de persulfate de potassium à 0,5% en poids, la polymérisation démarre et la pression est maintenue à 45 bars par du VDF. Après introduction de 1500 g de VDF on rajoute 100 g d'une solution de persulfate de potassium à 0,5% en poids. Après introduction de 8500 g de VDF au total (temps= 4h30) on laisse baisser la pression jusqu'à 15 bars et on dégaze le monomère résiduaire. Le latex est filtré. Le poids de latex obtenu est de 26,4 kg. Le taux de matières sèches (ou extrait sec) est de 30%. Dans le latex on rajoute 100 g d'une solution aqueuse contenant 0,6 g d'éthylsulfonate de potassium et 2 g d'acétate de sodium. Le latex est ensuite dilué à 20% de matières sèches et atomisé à l'aide d'un atomiseur NIRO MINOR PRODUCTION® avec une température d'entrée d'air de 140°C et de sortie d'air de 85°C. Le débit d'évaporation d'eau est de 7 kg/h. la poudre obtenue est ensuite granulée à l'aide d'une extrudeuse CLEXTRAL® BC 21 à 230°C, 120 tr/min.

### Exemple 3

Dans un réacteur de 30 litres sont introduits à température ambiante :
- 21 litres d'eau déionisée,
- 1,4 g de paraffine de point de fusion égal à 60°C,
- 1,8 g d'acétate de sodium trihydrate,
- 8,5 g d'une solution à 15% de perfluorooctanoate d'ammonium.
Après fermeture et désaération le réacteur est mis sous agitation et chauffé à 83°C. Après introduction de 29 g d'acétate d'éthyle le réacteur est pressurisé à 85 bars avec du VDF. Après injection de 180 g d'une solution de persulfate de potassium à 0,5% en poids, la polymérisation démarre et la pression est maintenue à 85 bars par du VDF. Après introduction de 3500g de VDF on rajoute 147 g d'acétate d'éthyle et 180 g d'une solution de persulfate de potassium à 0,5% en poids. Après introduction de 7600 g de VDF au total (temps= 2h) on laisse baisser la pression jusqu'à 40 bars et on dégaze le monomère résiduaire. Le latex est filtré et la paraffine excédentaire est éliminée. Le poids de latex obtenu est de 29,2 kg. Le taux de matières sèches (ou extrait sec) est de 25%. Le latex est ensuite dilué à 20% de matières sèches et atomisé à l'aide d'un atomiseur NIRO MINOR PRODUCTION® avec une température d'entrée d'air de 140°C et de sortie d'air de 85°C. Le débit d'évaporation d'eau est de 7 kg/h. la poudre obtenue est ensuite granulée à l'aide d'une extrudeuse CLEXTRAL® BC 21 à 230°C, 120 tr/min.

### Exemple 4

Il est analogue à l'exemple 3, la seule différence est le rajout dans le latex avant atomisation de 100 g d'une solution aqueuse contenant 0,5 g d'éthyl sulfonate de potassium.

### Exemple 5

Il est analogue à l'exemple 2, la seule différence est que l'ajout de 0,6 g d'éthyl sulfonate de potassium n'est pas effectué.

### Exemple comparatif 1

Il est analogue à l'exemple 1, la seule différence est que ni l'acétate de sodium ni l'ethyl sulfonate de potassium ne sont ajoutés.

### Exemple comparatif 2

Il est analogue à l'exemple 1; ni l'acetate de sodium ni l'ethyl sulfonate de potassium ne sont ajoutés. Par contre on ajoute dans le latex avant atomisation 100 g d'une solution aqueuse contenant 7,2 g de nitrate de sodium selon le brevet EP 870792.

### Exemple 6

Dans un réacteur de 30 litres sont introduits à température ambiante :
- 17 litres d'eau déionisée,
- 2 g de paraffine de point de fusion égal à 60°C,
- 52.8 g d'une solution à 15% de perfluorooctanoate d'ammonium.
Après fermeture et désaération le réacteur est mis sous agitation et chauffé à 83°C. Après introduction de 88 g d'acétate d'éthyle le réacteur est pressurisé à 45 bars avec du VDF. Après injection de 300 g d'une solution de persulfate de potassium à 0,5% en poids, la polymérisation démarre et la pression est maintenue à 45 bars par du VDF. Après introduction de 1500 g de VDF on rajoute 100 g d'une solution de persulfate de potassium à 0,5% en poids. Après introduction de 8500 g de VDF au total (temps= 4h30) on laisse baisser la pression jusqu'à 15 bars et on dégaze le monomère résiduaire. Le latex est filtré. Le poids de latex obtenu est de 26,4 kg. Le taux de matières sèches (ou extrait sec) est de 30%. Dans le latex on rajoute 100 g d'une solution aqueuse contenant 2 g d'acétate de sodium. Le latex est ensuite dilué à 20% de matières sèches et atomisé à l'aide d'un atomiseur NIRO MINOR PRODUCTION® avec une température d'entrée d'air de 140°C et de sortie d'air de 85°C. Le débit d'évaporation d'eau est de 7 kg/h. la poudre obtenue est ensuite granulée à l'aide d'une extrudeuse CLEXTRAL® BC 21 à 230°C, 120 tr/min.

### Exemple 7

Il est analogue à l'exemple 6, la seule différence est le rajout dans le latex avant atomisation de 100g d une solution contenant 0.6g d'ethyl sulfonate de potassium. Les résultats sont sur les tableaux 1 et 2 ci après.

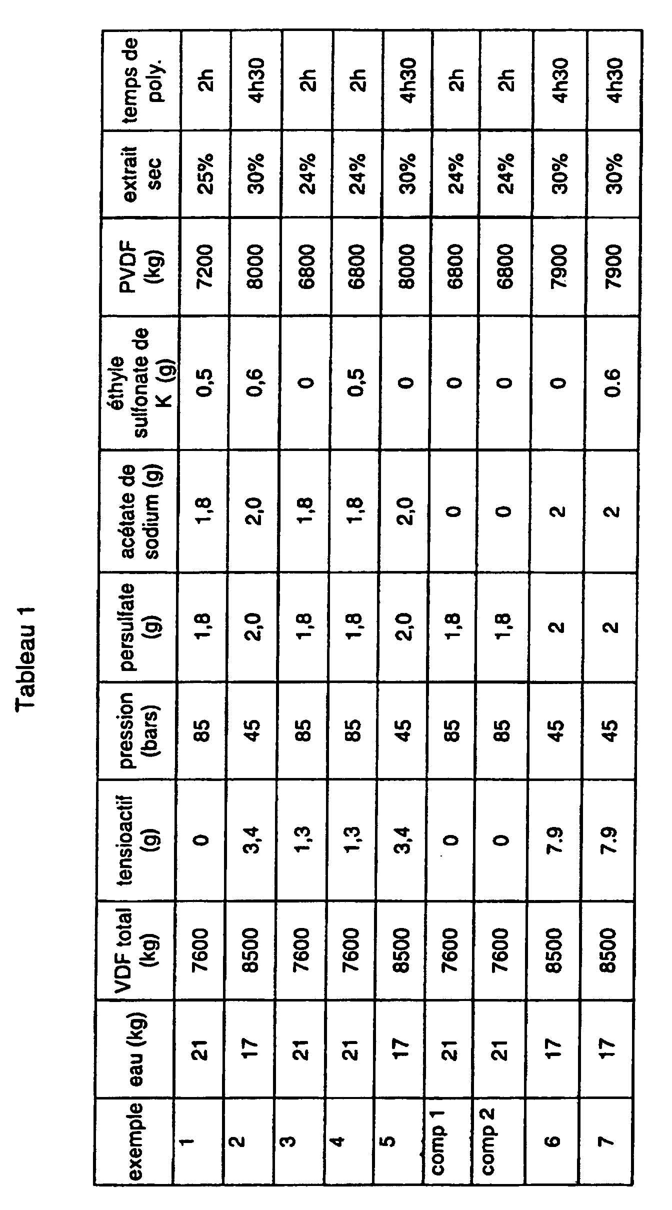

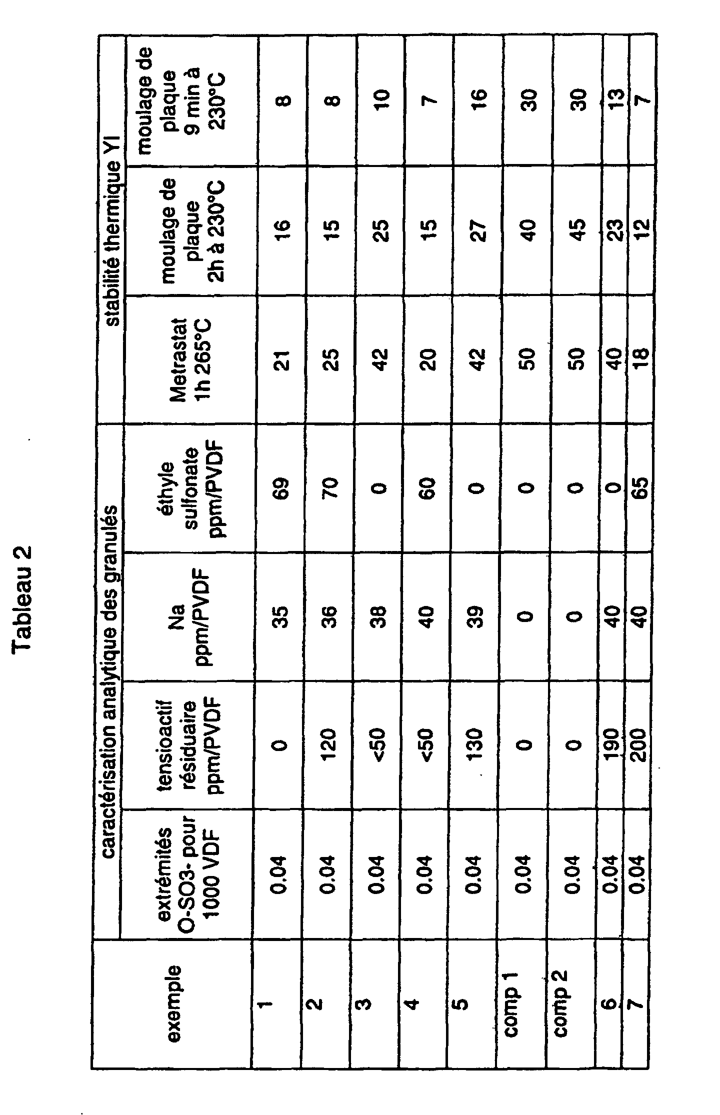

## Revendications

1. Procédé de fabrication de PVDF homopolymère ou copolymère par polymérisation radicalaire du fluorure de vinylidène (VDF), et éventuellement d'un comonomère, en dispersion aqueuse en présence d'un agent de transfert, d'un persulfate comme initiateur radicalaire, éventuellement d'un additif tensioactif, éventuellement d'une paraffine, dans lequel :
a) on ajoute de l'acétate de sodium soit au début, soit au cours, soit après la polymérisation,
b) on ajoute éventuellement un alkylsulfonate de potassium après la polymérisation,
c) on obtient une dispersion aqueuse de PVDF,
d) on recueille le PVDF par atomisation de la dispersion obtenue en c) avec de l'air à une température comprise entre 120 et 220°C, la dispersion aqueuse obtenue en c) n'étant pas lavée à l'eau avant atomisation.

2. Procédé selon la revendication 1 dans lequel l'additif tensioactif est choisi parmi ceux de formule générale : ZCₙF₂ₙCOOM dans laquelle Z est un atome de fluor ou de chlore, n est un nombre entier valant 6 à 13 et M est un atome d'hydrogène ou de métal alcalin ou un groupe ammonium ou un groupe ammonium comportant au moins un substituant alkyle inférieur.

3. Procédé selon l'une quelconque des revendications précédentes dans lequel la proportion d'acétate de sodium est comprise entre 50 et 600 ppm par rapport au PVDF fabriqué.

4. Procédé selon l'une quelconque des revendications précédentes dans lequel l'alkylsulfonate de potassium est choisi parmi l'éthyle, le méthyle, l'isopropyle et le n-propyle sulfonate de potassium.

5. Procédé selon l'une quelconque des revendications précédentes dans lequel la proportion d'alkylsulfonate de potassium est comprise entre 0 et 300 ppm par rapport au PVDF fabriqué.

6. Procédé discontinu ou semi-continu de fabrication de PVDF homopolymère ou copolymère selon l'une quelconque des revendications précédentes dans lequel :
• on charge le réacteur de polymérisation avec de l'eau, l'additif tensioactif éventuel et éventuellement une paraffine,
• le réacteur est désaéré pour éliminer l'oxygène,
• le réacteur est porté à la température choisie et on charge le VDF et le monomère éventuel jusqu'à atteindre la pression voulue,
• l'agent de transfert est introduit dans le réacteur soit en totalité soit en partie au départ et en partie au cours de la polymérisation,
• on ajoute de l'acétate de sodium en une ou plusieurs fois soit au début, soit au cours, soit après la polymérisation,
• on ajoute le persulfate (l'initiateur) en totalité ou en partie pour démarrer la polymérisation et la baisse de pression qui en résulte est compensée par l'ajout de VDF et du comonomère éventuel,
• le reste éventuel de l'initiateur est ajouté au cours de la polymérisation,
• après introduction de la quantité prévue de VDF et de comonomère éventuel le réacteur est dégazé et on obtient une dispersion aqueuse de PVDF,
• on ajoute éventuellement un alkyl sulfonate de potassium,
• la dispersion aqueuse de PVDF est introduite dans un atomiseur avec de l'air à une température comprise entre 120 et 220°C et on recueille le PVDF en poudre.

## Patentansprüche

1. Verfahren zur Herstellung von PVDF-Homopolymer oder -Copolymer durch radikalische Polymerisation von Vinylidenfluorid (VDF) und gegebenenfalls einem Comonomer in wäßriger Dispersion in Gegenwart eines Kettenübertragungsmittels, eines Persulfats als Radikalinitiator, gegebenenfalls eines Tensids und gegebenenfalls eines Paraffins, bei dem man:
a) zu Beginn, während oder nach der Polymerisation Natriumacetat zugibt,
b) gegebenenfalls nach der Polymerisation ein Kaliumalkylsulfonat zugibt,
c) eine wäßrige PVDF-Dispersion erhält und
d) das PVDF durch Zerstäuben der in Schritt c) erhaltenen Dispersion mit Luft bei einer Temperatur zwischen 120 und 220°C auffängt, wobei die in Schritt c) erhaltene wäßrige Dispersion nicht vor der Zerstäubung gewaschen wird.

2. Verfahren nach Anspruch 1, bei dem man das Tensid unter denjenigen der allgemeinen Formel ZCₙF₂ₙCOOM, worin Z für ein Fluor- oder Chloratom steht, n für eine ganze Zahl von 6 bis 13 steht und M für ein Wasserstoff- oder Alkalimetallatom oder eine Ammoniumgruppe oder eine Ammoniumgruppe mit mindestens einem Niederalkylsubstituenten steht, auswählt.

3. Verfahren nach einem der vorhergehenden Ansprüche, bei dem der Anteil an Natriumacetat zwischen 50 und 600 ppm, bezogen auf das hergestellte PVDF, liegt.

4. Verfahren nach einem der vorhergehenden Ansprüche, bei dem man das Kaliumalkylsulfonat unter Kaliumethylsulfonat, Kaliummethylsulfonat, Kaliumisopropylsulfonat und Kalium-n-propylsulfonat auswählt.

5. Verfahren nach einem der vorhergehenden Ansprüche, bei dem der Anteil an Kaliumalkylsulfonat zwischen 0 und 300 ppm, bezogen auf das hergestellte PVDF, liegt.

6. Diskontinuierliches oder halbkontinuierliches Verfahren zur Herstellung von PVDF-Homopolymer oder -Copolymer nach einem der vorhergehenden Ansprüche, bei dem man:
• den Polymerisationsreaktor mit Wasser, dem fakultativen Tensid und gegebenenfalls einem Paraffin beschickt,
• den Reaktor zur Entfernung von Sauerstoff entlüftet,
• den Reaktor auf die gewählte Temperatur bringt und mit VDF und dem fakultativen Monomer beschickt, bis der gewünschte Druck erreicht ist,
• das Kettenübertragungsmittel ganz oder teilweise zu Beginn der Polymerisation und teilweise während der Polymerisation einträgt,
• das Natriumacetat auf einmal oder portionsweise zu Beginn, während oder nach der Polymerisation zugibt,
• das Persulfat (den Initiator) ganz oder teilweise zugibt, um die Polymerisation zu starten, und den daraus resultierenden Druckabfall durch Zugabe von VDF und dem fakultativen Monomer kompensiert,
• während der Polymerisation den gegebenenfalls verbliebenen Rest des Initiators zugibt,
• nach Eintragen der vorgesehenen Menge an VDF und fakultativem Comonomer den Reaktor entgast und eine wäßrige PVDF-Dispersion erhält,
• gegebenenfalls ein Kaliumalkylsulfonat zugibt,
• die wäßrige PVDF-Dispersion mit Luft bei einer Temperatur zwischen 120 und 220°C in einen Zerstäuber einträgt und das PVDF als Pulver auffängt.

## Claims

1. Process for the manufacture of PVDF homopolymer or copolymer by radical polymerization of vinylidene fluoride (VDF), and optionally of a comonomer, in aqueous dispersion and in the presence of a transfer agent, of a persulphate as radical initiator, optionally of a surface-active additive and optionally of a paraffin wax, in which:
a) sodium acetate is added, either at the beginning, or during, or after the polymerization,
b) a potassium alkylsulphonate is optionally added after the polymerization,
c) an aqueous, PVDF dispersion is obtained,
d) the PVDF is collected by atomization of the dispersion obtained in c) with air at a temperature of between 120 and 220°C, the aqueous dispersion obtained in c) not being washed with water before atomization.

2. Process according to Claim 1, in which the surface-active additive is chosen from those of general formula: ZCₙF₂ₙCOOM
in which Z is a fluorine or chlorine atom, n is an integer with a value from 6 to 13 and M is a hydrogen or alkali metal atom or an ammonium group or an ammonium group comprising at least one lower alkyl substituent.

3. Process according to either one of the preceding claims, in which the proportion of sodium acetate is between 50 and 600 ppm with respect to the PVDF manufactured.

4. Process according to any one of the preceding claims, in which the potassium alkylsulphonate is chosen from potassium ethylsulphonate, methylsulphonate, isopropylsulphonate and n-propylsulphonate.

5. Process according to any one of the preceding claims, in which the proportion of potassium alkylsulphonate is between 0 and 300 ppm with respect to the PVDF manufactured.

6. Batchwise or semi-continuous process for the manufacture of PVDF homopolymer or copolymer according to any one of the preceding claims, in which:
• the polymerization reactor is charged with water, the optional surface-active additive and optionally a paraffin wax,
• the reactor is deaerated to remove the oxygen,
• the reactor is brought to the chosen temperature and VDF and the optional monomer are charged until the desired pressure is reached,
• the transfer agent is introduced into the reactor, either in its entirety or partly at the start of and partly during the polymerization,
• sodium acetate is added one or more times, either at the beginning, or during, or after the polymerization,
• the persulphate (the initiator) is added, in its entirety or in part, to start the polymerization and the fall in pressure which results therefrom is compensated for by the addition of VDF and of the optional comonomer,
• the possible remaining initiator is added during the polymerization,
• after introduction of the planned amount of VDF and of optional comonomer, the reactor is degassed and an aqueous PVDF dispersion is obtained,
• a potassium alkylsulphonate is optionally added,
• the aqueous PVDF dispersion is introduced into an atomizer with air at a temperature of between 120 and 220°C and the PVDF powder is collected.
